# EUROPEAN PATENT SPECIFICATION

(11) **EP 1 571 453 B1**
(45) Date of publication and mention of the grant of the patent: **27.02.2013**
(21) Application number: 04017089.6
(22) Date of filing: 20.07.2004
(51) Int. Cl.: G01P 3/44, G01P 3/487, F16C 19/52

(54) **Passive sensor for measuring the speed of a rolling contact bearing**
Passiver Sensor zur Bestimmung der Geschwindigkeit eines Kugellagers
Capteur passif pour la détermination de la vitesse d'un roulement a billes

(30) Priority: 05.03.2004 IT TO20040138
(43) Date of publication of application: 07.09.2005
(73) Proprietor: Aktiebolaget SKF, S 415 50 Göteborg (SE)
(72) Inventor: Audagnotto, Paolo, 10100 Torino (IT); Bragie' Damiano, 13843 Pettinengo (Biella) (IT); Gallucci, Francesco, 10042 Nichelino (Torino) (IT); Martini, Davide, 78450 Chavenay (FR)
(74) Representative: Fioravanti, Corrado

(56) References cited:
- EP-A- 1 342 633
- US-A- 4 946 295
- US-A- 5 293 124
- US-A- 5 873 658
- PATENT ABSTRACTS OF JAPAN vol. 1998, no. 14, 31 December 1998 (1998-12-31) -& JP 10 253647 A (NIPPON SEIKO KK), 25 September 1998 (1998-09-25)

## Description

The present invention refers to a passive sensor for measuring the speed of a rolling contact bearing.

The passive sensor for measuring the speed of a rolling contact bearing which is the subject of the present invention has advantageous applications in the field of motors in general, and in the field of electric motors in particular, to which the following description will make specific reference without losing any of its generality due to this fact.

In the field of electric motors, a well-known procedure is to install, in order to support the rotors of the motors themselves, at least one rolling contact bearing which presents an outer race which is integral with a fixed support of the rotor, and an inner race which is integral with the rotor, and it is also well-known to put a passive sensor for measuring speed side by side with the rolling contact bearing, the former comprising an annular magnet which is suitable for rotating together with the inner race, and a winding made of conductive material which is integral with the support and which faces the annular magnet in order to permit the circulation of a current which is induced by the rotation of the annular magnet itself and the consequent reading of the angular speed of the rolling contact bearing, or rather the rotor of the electric motor.

The above-described rolling contact bearing, and the passive sensor for measuring speed which is side by side with it, while having always permitted a reliable measuring of the angular speed of the electric motor, does, however, present some disadvantages which are due, in the first place, to the relatively large dimensions of the gap which reduces the efficiency of the reading and, in the second place, to the need to assembly separately to the electric motor the rolling contact bearing and the passive sensor for measuring speed with a consequent high rate of time and production costs.

The publication US-A-5 293 124 discloses a speed sensor with a flow concentrators encapsulated in plastics material. Snap connecting means form part of the embedding material.

The aim of the present invention is to produce a passive sensor for measuring the speed of a rolling contact bearing, which will resolve the above-described disadvantages in a simple and cost-effective fashion.

According to the present invention, a passive sensor for measuring the speed of a rolling contact bearing comprises the features of claim 1.

The present invention will now be described with reference to the attached drawings, which illustrate a non-limiting form of embodiment of the present invention, and in which:
- FIGURE 1 is a perspective view, with some parts in section and some parts removed for reasons of clarity, of a preferred form of embodiment of a passive sensor for measuring the speed of a rolling contact bearing according to the present invention,
- FIGURE 2 is a perspective view, on an enlarged scale, of the passive sensor for measuring speed which is shown in FIGURE 1; and
- FIGURES 3 and 4 illustrate, in perspective view, respective details which are shown in FIGURE 1.

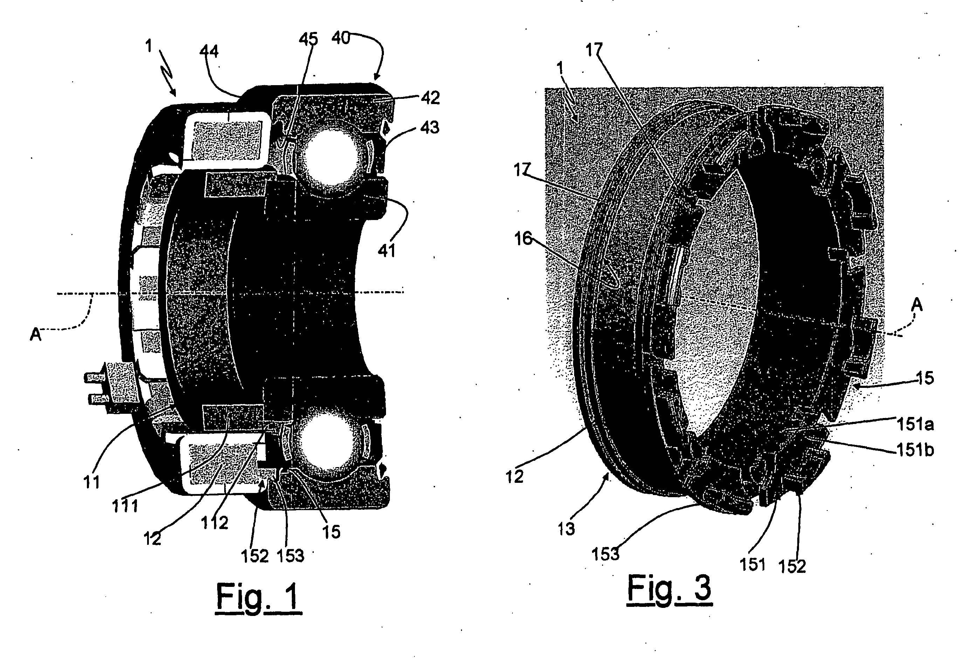

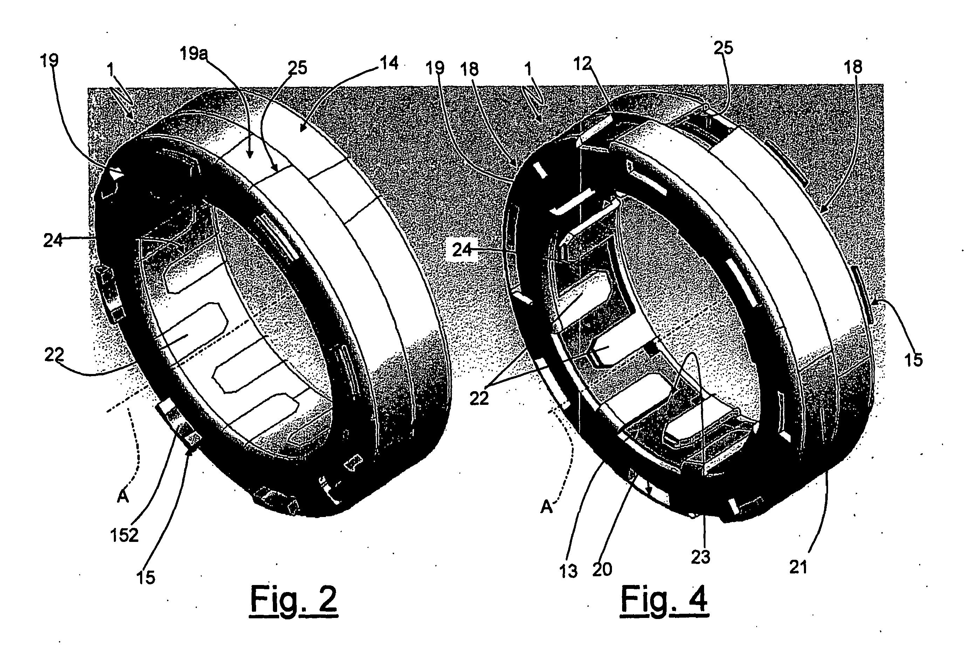

With reference to FIGURES 1 and 2, the number 1 indicates, in its entirety, a passive sensor for measuring the speed of a rolling contact bearing 40.

The rolling contact bearing 40 presents a rotation axis A, and comprises an inner race 41 and an outer race 42, which are co-axial in relation to each other and to the axis A, and of which the inner race 41 is radially delimited by a cylindrical surface, while the outer race 42 is axially delimited by an annular surface 44 which is transverse to the axis A, and is provided with an annular groove 45 which is arranged axially inside the surface 44.

The sensor 1 is mounted in integral fashion with the rolling contact bearing 40 from the part of the surface 44, and comprises a multipolar magnet 11 which is of an annular shape and which is suitable for rotating together with the inner race 41, and a winding 12 which is made of conductive material which is integral with the outer race 42 and which faces the magnet 11 in order to collect the current which is induced by the variations in magnetic flow which are obtained by the rotation of the magnet 11.

According to the illustration which is shown in FIGURE 3, the sensor 1 also comprises a support reel 13 for the winding 12, a casing 14 which is arranged around the reel 13 in order to insulate the winding 12 from the outside, and a number of gripping teeth 15, which are made in a single piece with the reel 13, and which are uniformly distributed around the rotation axis A.

The reel 13 comprises an annular hollow 16 which defines a housing for the winding 12, and two annular walls 17, which are arranged transverse to the axis A in order to axially delimit the hollow 16 itself.

The teeth 15 extend laterally from one of the two walls 17 of the reel 13 and axially towards the outside of the casing 14 in order to be snap inserted inside the groove 45 connecting them in relation to each other, and thus rendering the sensor 1 and the rolling contact bearing 40 integral in relation to each other. In particular, each tooth 15 comprises a first L-shaped bracket 151 which is provided with a semi-cylindrical portion 151a and with a semi-flange 151b, and a second bracket 152 which is engaged in the relative semi-flange 151b, and which extends transverse to the wall 17 itself axially towards the outside of the reel 13. While each semi-flange 151b is arranged frontally to the wall 17 at a determined axial distance from the wall 17 itself, and, with the relative semi-cylindrical portion 151a, it contributes to providing the necessary elasticity for the relative tooth 15 in order to permit the snap insertion of the relative projection 153 inside the groove 45.

According to the illustration which is shown in FIGURE 4, the casing 14 comprises two flow concentrators 18 which are made of plastic material and which are mounted on the reel 13, and an assembly portion 19a, which is made, in the same way as the reel 13 itself, of polymeric material in order to be co-moulded together with the reel 13, with the winding 12, and with the flow concentrators 18 so as to seal the above-mentioned elements from the outside.

In particular, the flow concentrators 18 are suitable for concentrating the magnetic flow which is produced by the rotation of the magnet 11, and they are each defined by a lateral annular body 19 which is arranged laterally to the reel 13 and which is provided with a number of windows 20 for the passage of the bracket 152 of the teeth 15, and with a cylindrical body 21 which is integral with the body 19, and which is arranged radially outside the winding 12 laterally to the body 21 of the other concentrator 18.

The flow concentrators 18 also comprise a number of clips 22, which are integral with the relative body 19 radially inside the body 19 itself, and are folded in such a way as to abut an inner cylindrical surface 23 of the reel 13 in order to stabilise the mounting of the flown concentrators 18 onto the reel 13 itself and in order to define in relation to each other gaps 24 which are filled by the assembly portion 19a in the same way as further gaps 25 which are left by the body 21.

In particular, the assembly portion 19a is made of plastic material charged talc, and, during the co-moulding, it is suitable for being inserted inside the gaps 24 and 25 in such a way as to seal the casing 14, and to completely insulate the winding 12 and the reel 13 from the outside.

The magnet 11 comprises a cylindrical magnetic body 111 which is arranged inside the casing 14, and an annular bracket 112, which is integral with the magnetic body 111 and which axially extends towards the outside of the magnetic body 111 in order to be engaged on the surface 43 on which it is suitable for being glued thus rendering the inner race 41 and the magnet 11 integral in relation to each other in terms of rotation.

It is intended that the present invention should not be limited to the forms of embodiment which are herein described and illustrated, which are to be considered as examples of forms of embodiment of a passive sensor for measuring the speed of a rolling contact bearing, and which may instead be subject to further modifications relating to the shape and disposition of the parts, as well as to details pertaining to construction and assembly.

## Claims

1. Passive sensor (1) for measuring the speed of a rolling contact bearing (40) comprising a first (41) and a second (42) race which are co-axial in relation to each other and to a rotation axis (A) of the rolling contact bearing (40) itself;
the passive sensor for measuring speed comprising:
- an annular magnetic element (11) which is suitable for rotating together with the first race (41),
- a winding (12) which is made of conductive material and which faces the magnetic element (11);
- a support reel (13) made of polymeric material comprising an annular hollow (16) defining a housing for, and supporting said winding (12); and
- snap connecting means (15) which are produced in a single piece with the reel (13) and which can be engaged in an inner groove (45) of the rolling contact bearing (40) in order to render the rolling contact bearing (40) and the passive sensor (1) themselves integral in relation to each other;
the passive sensor for measuring speed being **characterized by** the fact that it further comprises a casing (14) which in turn comprises two flow concentrator means (18) which are made of metallic material and which are mounted on the reel (13), and an assembly portion (19a) which is made, like the reel, of polymeric material, and which is co-moulded together with the reel (13) with the winding (12) and the flow concentrators (18) to seal the casing from and to completely insulate the winding (12) and the reel (13) from the outside.

2. Passive sensor according to Claim 1, **characterised by** the fact that the said assembly portion (19a) is made of plastic material charged talc.

3. Passive sensor according to Claim 1, **characterised by** the fact that the snap connecting means (15) are defined by a number of gripping teeth (15) which are uniformly distributed around the rotation axis (A), and which axially extend towards the outside of the said casing (14).

4. Passive sensor according to Claim 3, **characterised by** the fact that each gripping tooth (15) comprises a first and second bracket (151, 152) which are integral in relation to each other; the first bracket (151) being constrained to the reel (13) in order to elastically support the second bracket (152).

5. Passive sensor according to Claim 1, **characterised by** the fact that it comprises further connecting means (112) which are produced in a single piece with the said annular magnetic element (11), and which are mounted on the first race (41).

6. Passive sensor according to any one of the preceding claims, **characterised in that** the flow concentrators (18) further comprise a number of clips (22) which are integral with lateral annular bodies (19) of the flow concentrators, the clips (22) being radially inside the bodies (19) and folded in such a way as to abut an inner cylindrical surface (23) of the reel (13), the clips (22) defining gaps (24) in relation to each other, the gaps (24) being filled with the assembly portion (19a).

7. Passive sensor according to claim 6, **characterised in that** the assembly portion (19a) fills also further gaps (25) defined by a cylindrical body (21) integral with the annular body (19).

## Patentansprüche

1. Passiver Sensor (1) zur Bestimmung der Geschwindigkeit eines Kugellagers (40), das einen ersten (41) und einen zweiten (42) Laufring aufweist, die in Bezug zueinander und zu einer Drehachse (A) des Kugellagers (40) selbst koaxial sind;
wobei der passive Sensor zur Bestimmung der Geschwindigkeit Folgendes aufweist:
- ein ringförmiges magnetisches Element (11), das zur Drehung gemeinsam mit dem ersten Laufring (41) geeignet ist,
- eine Wicklung (12), die aus leitendem Material besteht und dem magnetischen Element (11) zugewandt ist;
- eine Trägertrommel (13), die aus polymerem Material hergestellt ist und einen ringförmigen Hohlraum (16) aufweist, der ein Gehäuse für die Wicklung (12) definiert und diese trägt; und
- Schnappanschlussmittel (15), die einstückig mit der Trommel (13) hergestellt sind und die in eine Innennut (45) des Kugellagers (40) eingreifen können, um das Kugellager (40) und den passiven Sensor (1) in Bezug zueinander einstückig zu machen;
wobei der passive Sensor zur Bestimmung der Geschwindigkeit durch die Tatsache gekennzeichnet ist, dass er des Weiteren ein Gehäuse (14) aufweist, das seinerseits zwei Strömungskonzentratormittel (18) aufweist, die aus metallischem Material hergestellt sind und die an der Trommel (13) montiert sind, sowie ein Montageteil (19a), das wie die Trommel aus polymerem Material hergestellt ist und gemeinsam mit der Trommel (13) mit der Wicklung (12) und den Strömungskonzentratoren (18) geformt wird, um das Gehäuse von der Außenseite abzudichten und die Wicklung (12) und die Trommel (13) vollständig von der Außenseite zu isolieren.

2. Passiver Sensor nach Anspruch 1, **gekennzeichnet durch** die Tatsache, dass das Montageteil (19a) aus mit Kunststoffmaterial beladenem Talk hergestellt ist.

3. Passiver Sensor nach Anspruch 1, **gekennzeichnet durch** die Tatsache, dass die Schnappanschlussmittel (15) **durch** eine Anzahl von Greifzähnen (15) definiert sind, die gleichförmig um die Drehachse (A) verteilt sind und die sich axial zu der Außenseite des Gehäuses (14) erstrecken.

4. Passiver Sensor nach Anspruch 3, **gekennzeichnet durch** die Tatsache, dass die Greifzähne (15) einen ersten und einen zweiten Winkel (151, 152) aufweisen, die in Bezug zueinander einstückig sind; wobei der erste Winkel (151) mit der Trommel (13) verbunden ist, um den zweiten Winkel (152) elastisch zu stützen.

5. Passiver Sensor nach Anspruch 1, **gekennzeichnet durch** die Tatsache, dass er des Weiteren Verbindungsmittel (112) umfasst, die in einem einzigen Stück mit dem ringförmigen magnetischen Element (11) hergestellt werden und die an dem ersten Laufring (41) montiert sind.

6. Passiver Sensor nach einem der vorangehenden Ansprüche, **dadurch gekennzeichnet, dass** die Strömungskonzentratoren (18) des Weiteren eine Anzahl von Klemmen (22) aufweisen, die mit seitlichen ringförmigen Körpern (19) der Strömungskonzentratoren einstückig gebildet sind, wobei die Klemmen (22) radial im Inneren der Körper (19) liegen und derart gefaltet sind, dass sie gegen eine innere zylindrische Oberfläche (23) der Trommel (13) liegen, wobei die Klemmen (22) Spalte (24) in Bezug zueinander definieren, wobei die Spalte (24) mit dem Montageteil (19a) gefüllt werden.

7. Passiver Sensor nach Anspruch 6, **dadurch gekennzeichnet, dass** das Montageteil (19a) auch weitere Spalte (25) füllt, die durch einen zylindrischen Körper (21) definiert sind, der einstückig mit dem ringförmigen Körper (19) gebildet ist.

## Revendications

1. Capteur passif (1) pour mesurer la vitesse d'un palier à roulement (40) comprenant un premier (41) et un deuxième (42) chemin de roulement qui sont coaxiaux l'un par rapport à l'autre et à un axe de rotation (A) du palier à roulement (40) lui-même ; le capteur passif pour mesurer la vitesse comprenant :
- un élément magnétique annulaire (11) qui est approprié pour tourner conjointement avec le premier chemin de roulement (41),
- un enroulement (12) fabriqué en matériau conducteur et faisant face à l'élément magnétique (11) ;
- une bobine de support (13) fabriquée en matériau polymère, comprenant une cavité annulaire (16) définissant un logement pour l'enroulement (12) et supportant ledit enroulement ; et
- des moyens de connexion par encliquetage (15) qui sont produits d'une seule pièce avec la bobine (13) et qui peuvent être engagés dans une gorge intérieure (45) sur le palier à roulement (40) afin de rendre le palier à roulement (40) et le capteur passif (1) intégrés d'une seule pièce l'un à l'autre ;
le capteur passif pour mesurer la vitesse étant **caractérisé en ce qu'**il comprend en outre un boîtier (14) qui comprend à son tour deux moyens concentrateurs de flux (18) qui sont fabriqués en matériau métallique et qui sont montés sur la bobine (13), et une portion d'assemblage (19a) qui est fabriquée, comme la bobine, en matériau polymère, et qui est co-moulée, conjointement avec la bobine (13), avec l'enroulement (12) et les concentrateurs de flux (18) de manière à sceller le boîtier vis-à-vis de l'extérieur et à isoler complètement l'enroulement (12) et la bobine (13) de l'extérieur.

2. Capteur passif selon la revendication 1, **caractérisé en ce que** ladite portion d'assemblage (19a) est fabriquée en talc chargé de matière plastique.

3. Capteur passif selon la revendication 1, **caractérisé en ce que** les moyens de connexion par encliquetage (15) sont définis par un certain nombre de dents de préhension (15) qui sont réparties uniformément autour de l'axe de rotation (A) et qui s'étendent axialement vers l'extérieur dudit boîtier (14).

4. Capteur passif selon la revendication 3, **caractérisé en ce que** chaque dent de préhension (15) comprend une première et une deuxième console (151, 152) qui sont réalisées de manière intégrée d'une seule pièce l'une à l'autre ; la première console (151) étant précontrainte contre la bobine (13) afin de supporter élastiquement la deuxième console (152).

5. Capteur passif selon la revendication 1, **caractérisé en ce qu'**il comprend des moyens de connexion supplémentaires (112) qui sont produits d'une seule pièce avec ledit élément magnétique annulaire (11), et qui sont montés sur le premier chemin de roulement (41).

6. Capteur passif selon l'une quelconque des revendications précédentes, **caractérisé en ce que** les concentrateurs de flux (18) comprennent en outre un certain nombre de pinces (22) qui sont intégrées d'une seule pièce à des corps annulaires latéraux (19) des concentrateurs de flux, les pinces (22) étant radialement à l'intérieur des corps (19) et étant pliées de manière à buter contre une surface cylindre interne (23) de la bobine (13), les pinces (22) définissant des espaces (24) les unes par rapport aux autres, les espaces (24) étant remplis par la portion d'assemblage (19a).

7. Capteur passif selon la revendication 6, **caractérisé en ce que** la portion d'assemblage (19a) remplit aussi des espaces supplémentaires (25) définis par un corps cylindrique (21) intégré d'une seule pièce avec le corps annulaire (19).
